# EUROPEAN PATENT APPLICATION

(11) **EP 4 579 889 A2**
(43) Date of publication of application: **02.07.2025**
(21) Application number: 24211444.5
(22) Date of filing: 07.11.2024
(51) Int. Cl.: H01M 50/103, H01M 50/209, H01M 50/249, H01M 50/298, H01M 50/503, H01M 50/548, H01M 50/553

(54) **CELL ARRAY ASSEMBLY, SECONDARY BATTERY PACK INCLUDING SAME, AND METHOD OF MANUFACTURING SECONDARY BATTERY PACK INCLUDING SAME**

(30) Priority: 26.12.2023 KR 20230191406
(71) Applicant: SAMSUNG SDI CO., LTD., Yongin-si, Gyeonggi-do 17084 (KR)
(72) Inventor: Jeon, Sunghyun, 17084 Yongin-Si, Gyeonggi-do (KR); Moon, Soodeok, 17084 Yongin-si, Gyeonggi-do (KR)
(74) Representative: Gulde & Partner

(57) **Abstract**

A secondary battery pack (10) includes: a plurality of cell arrays (10), each including a plurality of unit cells (100) located in series along a first direction (X-axis); and a frame (20) to include the cell arrays (10). Each of the unit cells (100) includes: a first surface (111) having a long side extending in the first direction (X-axis); a second surface (112) opposite to the first surface (111) and having a long side extending in the first direction (X-axis); a third surface (113) perpendicular to the first surface (111) and in contact with the long side of the first surface (111) and the long side of the second surface (112); a fourth surface (114) opposite to the third surface (113); a first side surface (111) in contact with short sides of the first to fourth surfaces (111, 112, 113, 114); a second side surface (116) opposite to the first side surface (115); a first electrode terminal (130) on the first side surface (115); and a second electrode terminal on the second side surface (116).

## Description

### BACKGROUND

### 1. Field

Aspects of embodiments of the present disclosure relate to a cell array assembly, a secondary battery pack including the same, and a method of manufacturing a secondary battery pack including the same.

### 2. Description of the Related Art

A secondary battery refers to a rechargeable battery that may be charged and discharged multiple times. Secondary batteries are mainly used in various suitable applications, such as for various suitable electronics (e.g., smartphones, laptops, and tablets), electric vehicles, solar power generation, and emergency power supplies. As an example, lithium-ion batteries have high energy density and high charge and discharge efficiency, and thus, may be used in various suitable electronic products and electric vehicles.

A secondary battery may be disposed in a product, such as an electric vehicle, in the form of a secondary battery pack. A secondary battery pack may include a plurality of secondary battery modules, a cell protection device, and a control device, and may be disposed in an electric vehicle. For example, to protect unit cells from external impacts, a secondary battery module including an assembly of unit cells packaged within a case may be provided, and a plurality of secondary battery modules may be disposed within a pack housing together with the protection device and the control device. With the increasing interest in improving the performance of electric vehicles, secondary battery packs from which the module structure is excluded are being developed in the form of a module-free pack and a cell-to-pack (CTP) type in an effort to improve the energy density of secondary battery packs.

The above information disclosed in this Background section is for enhancement of understanding of the background of the present disclosure, and therefore, it may contain information that does not constitute prior art.

### SUMMARY

Secondary battery packs without the module structure may have reduced structural strength, so it may be desired to increase the structural strength of such secondary battery packs without the module structure. Further, it may be desired to improve the energy density by increasing the density of unit cells within the secondary battery pack.

Embodiments of the present disclosure may be directed to a cell array assembly, a secondary battery pack including the same, and a method of manufacturing a secondary battery pack including the same.

The above and other aspects and features of the present disclosure will be more apparent from the following description of some embodiments of the present disclosure.

According to a first aspect of the present disclosure, a secondary battery pack includes: a plurality of cell arrays, each including a plurality of unit cells located in series along a first direction; and a frame configured to include the cell arrays. Each of the unit cells includes: a first surface having a long side extending in the first direction; a second surface opposite to the first surface and having a long side extending in the first direction; a third surface perpendicular to the first surface and in contact with the long side of the first surface and the long side of the second surface; a fourth surface opposite to the third surface and in contact with another long side of the first surface and another long side of the second surface; a first side surface in contact with short sides of the first to fourth surfaces; a second side surface opposite to the first side surface; a first electrode terminal on the first side surface; and a second electrode terminal on the second side surface.

In an embodiment, the cell arrays may include a first cell array and a second cell array, and the cell arrays may be located within the frame so that the third surface of a 1_1 st unit cell of the first cell array faces the fourth surface of a 2_1st unit cell of the second cell array.

In an embodiment, the first electrode terminal of the 1_1st unit cell of the first cell array may be electrically connected to the second electrode terminal of a 1_2nd unit cell of the first cell array that are adjacent to each other in the first direction. In other words, the plurality of cell arrays comprises a first cell array and a second cell array, the plurality of unit cells of the first cell array comprises a 1_1 st unit cell and a 1_2nd unit cell, and a first electrode terminal of the 1_1st unit cell is electrically connected to a second electrode terminal of the 1_2nd unit cell, both unit cells are (directly) adjacent to each other in the first direction (X-axis).

In an embodiment, the first electrode terminal of the 1_1st unit cell and the second electrode terminal of the 1_2nd unit cell may be electrically connected to each other by a junction located therebetween.

Preferably, the junction may have a structure defined by brazing, laser brazing, welding, or soldering. In other words, the first electrode terminal of the 1_1st unit cell and the second electrode terminal of the 1_2nd unit cell may be electrically connected to each other by brazing, laser brazing, welding, or soldering. Thus, forming a junction therebetween. This has the advantage, that connecting members, such as busbars, become redundant between the unit cells and a junction reduces the weight of a secondary battery pack, thereby increasing the energy density.

In an embodiment, the plurality of cell arrays comprises a first cell array and a second cell array, and the secondary battery pack further comprises a cooling plate between the first cell array and the second cell array.

In an embodiment, the secondary battery pack may further include a cooling plate between the first cell array and the second cell array.

Preferably, the cooling plate may include: at least one inlet configured to enter cooling water into the cooling plate; and at least one outlet configured to exit cooling water from the cooling plate.

In an embodiment, the secondary battery pack may further include a heat transfer material located in at least one position between the first cell array and the cooling plate or between the second cell array and the cooling plate. In addition to the heat dissipation function of the cooling plate and heat transfer material, this arrangement provides the advantage of an increased structural strength of the battery pack without need of further reinforcement members and thus further reducing the weight of a secondary battery pack and increasing the energy density.

In an embodiment, the cell arrays may include a first cell array, and a second cell array adjacent to the first cell array. The cell arrays may be located so that an electrode polarity of an outermost unit cell of the first cell array in the first direction is different from an electrode polarity of an outermost unit cell of the second cell array in the first direction.

In an embodiment, the secondary battery pack may further include a busbar assembly electrically connecting the first cell array and the second cell array to each other.

In an embodiment, the busbar assembly may include: a first busbar coupled to the first electrode terminal of the outermost unit cell of the first cell array; a second busbar connecting the first busbar and the frame to each other; a third busbar coupled to the second electrode terminal of the outermost unit cell of the second cell array; a fourth busbar connecting the third busbar and the frame to each other; and a fifth busbar connecting the second busbar and the fourth busbar to each other.

In an embodiment, the busbar assembly may include: a first busbar coupled to the first electrode terminal of the outermost unit cell of the first cell array; and a third busbar coupled to the second electrode terminal of the outermost unit cell of the second cell array. The first busbar and the third busbar may be connected in series.

In an embodiment, the secondary battery pack may further include a battery management device electrically connected to the first cell array by: a first busbar coupled to the first electrode terminal of the outermost unit cell of the first cell array; and a second busbar connecting the first busbar and the frame to each other.

In an embodiment, the cell arrays may include the first cell array to an n^{th} cell array sequentially located in a direction perpendicular to the first direction, where n may be a natural number greater than 1, for example greater than 2, and the battery management device may be electrically connected to the first electrode terminal of the outermost unit cell of the first cell array and the second electrode terminal of the outermost unit cell of the n^{th} cell array.

According to one or more embodiments of the present disclosure, a cell array assembly includes: a first cell array including a plurality of unit cells located in series along a first direction; and a second cell array including a plurality of unit cells located in series along the first direction, the second cell array being adjacent to the first cell array in a direction perpendicular to the first direction. Each of the unit cells includes: a first surface having a long side extending in the first direction; a second surface opposite to the first surface, and having a long side extending in the first direction; a third surface perpendicular to the first surface, and in contact with the long side of the first surface and the long side of the second surface; a fourth surface opposite to the third surface, and in contact with another long side of the first surface and another long side of the second surface; a first side surface in contact with short sides of the first to fourth surfaces; a second side surface opposite to the first side surface; a first electrode terminal on the first side surface; and a second electrode terminal on the second side surface.

In an embodiment, the first and second cell arrays may be located so that the third surface of a 1_1st unit cell of the first cell array faces the fourth surface of a 2_1 st unit cell of the second cell array.

In an embodiment, the first electrode terminal of the 1_1st unit cell of the first cell array and the second electrode terminal of a 1_2nd unit cell of the first cell array may be adjacent to each other in the first direction to be electrically connected to each other by a junction therebetween.

In an embodiment, the junction may have a structure defined by brazing, laser brazing, welding, or soldering.

In an embodiment, the cell array assembly may further include a cooling plate between the first cell array and the second cell array.

According to a second aspect of the present disclosure, a method of manufacturing a secondary battery pack includes: forming a cell array by electrically connecting a first electrode terminal of one unit cell and a second electrode terminal of another adjacent unit cell to each other from among a plurality of unit cells; containing a plurality of cell arrays including the cell array within a frame; and electrically connecting the cell arrays to each other. Each of the unit cells includes: a first electrode terminal in a first side surface; and a second electrode terminal in a second side surface opposite to the first side surface.

According to some embodiments of the present disclosure, a cell array may be provided by electrically connecting a plurality of unit cells by welding. As a result, the cell array may be provided without connecting members, such as busbars, to reduce the weight of a secondary battery pack, thereby increasing the energy density.

According to some embodiments of the present disclosure, a cell array may be provided by connecting in series unit cells, each provided with two different electrode terminals on opposite sides thereof, and a cooling plate facing one side surface of the cell array extending in the longitudinal direction may be inserted and disposed perpendicularly or substantially perpendicularly in the frame of the pack, thereby increasing the structural strength of a secondary battery pack.

However, the aspects and features of the present disclosure are not limited to those described above, and the above and other aspects and features of the present disclosure will be more clearly understood by those having ordinary skill in the art from the detailed description with reference to the drawings, and may be apparent therefrom, or may be learned by practicing one or more of the presented embodiments of the present disclosure.

### BRIEF DESCRIPTION OF DRAWINGS

The above information disclosed in this Background section is for enhancement of understanding of the background of the present disclosure, and therefore, it may contain information that does not constitute prior art.
FIG. 1 is a perspective view illustrating a unit cell according to one or more embodiments of the present disclosure.
FIG. 2 is a perspective view illustrating the shape of the unit cell according to one or more embodiments of the present disclosure.
FIG. 3 is a perspective view illustrating a secondary battery pack according to one or more embodiments of the present disclosure.
FIG. 4 illustrates a method of placing a plurality of cell arrays within a frame according to one or more embodiments of the present disclosure.
FIG. 5 illustrates an example of the cell array including a plurality of unit cells connected to each other, according to one or more embodiments of the present disclosure.
FIG. 6 illustrates an enlarged view of the region R in FIG. 5.
FIG. 7 illustrates an example of the cell array assembly including the cell arrays according to one or more embodiments of the present disclosure.
FIG. 8 illustrates an example of the cell array assembly including a busbar assembly according to one or more embodiments of the present disclosure.
FIG. 9 illustrates an example of an electrical connection configuration of the cell array assembly and the battery management device according to one or more embodiments of the present disclosure.
FIG. 10 illustrates an example of the cell array assembly to which the cooling plates are attached, according to one or more embodiments of the present disclosure.
FIG. 11 illustrates an example of the cell array assembly including a heat transfer material according to one or more embodiments of the present disclosure.
FIG. 12 is a flowchart illustrating a method of manufacturing a secondary battery pack according to one or more embodiments of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

Any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, and the like as being "the same" may mean that they are "substantially the same". Thus, the phrase "substantially the same" may include a case having a deviation that is considered low in the art, for example, such as a deviation of 5% or less. In addition, when a certain parameter is referred to as being uniform in a given region, it may mean that it is uniform in terms of an average.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

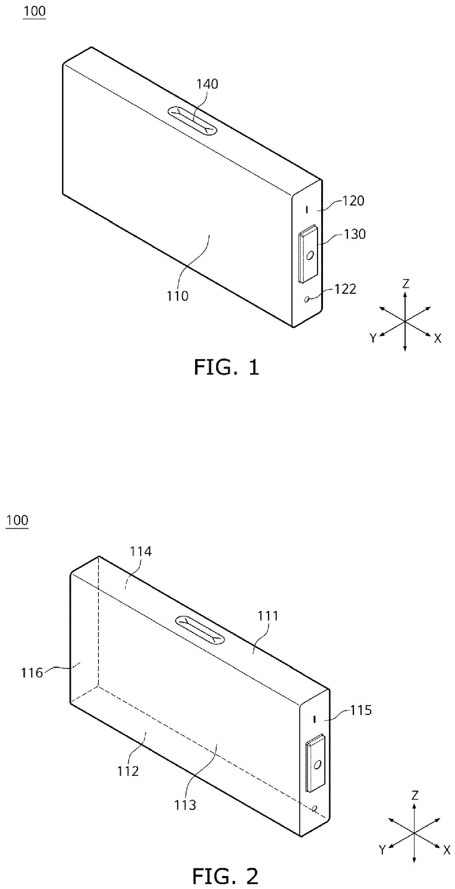

FIG. 1 is a perspective view illustrating a unit cell 100 according to one or more embodiments of the present disclosure.

Referring to FIG. 1, the unit cell 100 may include one or more electrode assemblies, a case 110, a first cap plate 120, a second cap plate opposite to the first cap plate 120, a first electrode terminal 130, and a second electrode terminal. Each of the one or more electrode assemblies may be wound or stacked, with a separator formed of an insulation material provided between a positive electrode and a negative electrode. The case 110 may contain the one or more electrode assemblies therein.

Each of the positive electrode and the negative electrode may include a current collector including (e.g., made of) a thin metal foil having a coated portion on which an active material is coated, and an uncoated portion on which the active material is not coated.

The positive electrode and the negative electrode may be wound after interposing the separator therebetween, which may be an insulator. However, the present disclosure is not limited thereto, and the electrode assembly may have a stacked structure in which a positive electrode and a negative electrode, each including (e.g., made of) a plurality of sheets, are alternately stacked with a separator interposed therebetween.

The case 110 may form the overall outer appearance of the unit cell 100, and may include (e.g., may be made of) a conductive metal, such as aluminum, an aluminum alloy, or a nickel-plated steel. In addition, the case 110 may provide a space (e.g., an internal space) in which the electrode assembly is accommodated.

In some embodiments, the first cap plate 120 and the second cap plate may be connected to (e.g., coupled to or attached to) open sides of the case 110, respectively, to seal the case 110. In more detail, the case 110 may include opposite open sides. The first cap plate 120 may seal an open first side of the case 110, and the second cap plate may seal an open second side opposite to the open first side. In addition, the first cap plate 120 may include an electrolyte inlet 122. For example, the electrolyte inlet 122 may be a through-hole provided in the first cap plate 120, and may allow an electrolyte to be injected therethrough into the case 110 after an open area (e.g., the open first side) of the case 110 is connected with (e.g., coupled with or attached with) the first cap plate 120 and is hermetically closed. The electrolyte inlet 122 may be hermetically closed with a hermetically closing member after the electrolyte is injected. The inlet 122 is illustrated as being provided in the first cap plate 120 in FIG. 1, but the present disclosure is not limited thereto, and the position of the inlet 122 may be variously modified as needed or desired.

The first electrode terminal 130 may be positioned on the first cap plate 120 to be electrically connected to a first electrode tab of the electrode assembly, and may extend through the first cap plate 120. Similarly, the second electrode terminal may be positioned on the second cap plate to be electrically connected to a second electrode tab of the electrode assembly, and may extend through the second cap plate. FIG. 1 illustrates the first electrode terminal 130 as a negative electrode terminal and the second electrode terminal as a positive electrode terminal.

While the case 110 including the opposite open sides is described with reference to FIG. 1 as an example, the present disclosure is not limited thereto, and the shape of the case 110 may be variously modified into various suitable shapes as needed or desired. For example, the case 110 may have a first side that is open, and the remaining sides of the case 110 may be integrated with each other (e.g., may be integrally formed). In this case, the cap plate may seal the open first side, and a second side opposite to the open first side may be provided with an electrode terminal that may be electrically connected to an electrode tab of an electrode assembly.

In some embodiments, a vent 140 may be provided in at least one side of the unit cell 100 (e.g., the top surface of the unit cell 100). The vent 140 may be opened in response to an internal pressure of the unit cell 100 being (e.g., detected to be) at a critical pressure (e.g., a predetermined critical pressure) or higher. In some embodiments, the vent 140 may include a notch. The notch may be removed from a first surface or side of the unit cell 100 (e.g., a first surface 111 in FIG. 2) to a thickness (e.g., a predetermined thickness), or may include (e.g., may be) at least one recess. The notch may be ruptured in a case where the internal pressure of the unit cell 100 exceeds the critical pressure.

The unit cell 100 may be a lithium battery cell, a sodium battery cell, or the like. However, the present disclosure is not limited thereto, and the unit cell 100 may include any suitable kind of cell capable of repeatedly providing electricity by being charged and discharged. In some embodiments, in a case where the unit cell 100 is the lithium battery cell, the unit cell 100 may be used in an electric vehicle (EV) due to superior lifetime and high rate characteristics. For example, the unit cell 100 may be used in a hybrid vehicle, such as a plug-in hybrid electric vehicle (PHEV). In addition, the lithium battery cell may be used in a field in which a large amount of power storage is used or desired. For example, the lithium battery cell may be used in an electric bicycle, a power tool, and the like.

FIG. 2 is a perspective view illustrating the shape of the unit cell 100 according to one or more embodiments of the present disclosure.

Referring to FIG. 2, the unit cell 100 may include the first surface 111, a second surface 112, a third surface 113, a fourth surface 114, a first side surface 115, and a second side surface 116.

The first surface 111 may be a top surface (e.g., a top view) of the unit cell 100. The first surface 111 may include long sides extending in a first direction (e.g., the X-axis), and short sides extending in a second direction (e.g., the Y-axis). The first surface 111 may have a rectangular shape. The first direction (X-axis) may be the longitudinal direction of the unit cell 100. The first direction (X-axis) may be perpendicular to or substantially perpendicular to the second direction (Y-axis). In addition, the first direction (X-axis) may be the longitudinal direction of the unit cell 100, and the second direction (Y-axis) may be the width direction of the unit cell 100. In some embodiments, the vent 140 (e.g., see FIG. 1) may be provided in the first surface 111.

The second surface 112 may be a bottom surface (e.g., a bottom view) of the unit cell 100. The second surface 112 may include long sides extending in the first direction (X-axis), and short sides extending in the second direction (Y-axis). The second surface 112 may have a rectangular shape. The second surface 112 may be opposite to the first surface 111. In more detail, the second surface 112 may be opposite to the first surface 111 in a third direction (e.g., the Z-axis). The third direction (Z-axis) may be perpendicular to or substantially perpendicular to the first direction (X-axis) and the second direction (Y-axis). The third direction (Z-axis) may be the height direction of the unit cell 100.

The length of the long side of the first surface 111 may be the same or substantially the same as the length of the long side of the second surface 112. The length of the short side of the first surface 111 may be the same or substantially the same as the length of the short side of the second surface 112. The first surface 111 and the second surface 112 may have the same or substantially the same shape as each other.

The third surface 113 may be a front surface (e.g., a front view) of the unit cell 100. The third surface 113 may include long sides extending in the first direction (X-axis), and short sides extending in the third direction (Z-axis). The third surface 113 may have a rectangular shape. The third surface 113 may be in contact with the long sides of the first surface 111 and the second surface 112. In other words, one of the long sides of the third surface 113 may be in contact with one of the long sides of the first surface 111, and the other of the long sides of the third surface 113 may be in contact with one of the long sides of the second surface 112. The length of the short side of the third surface 113 may be longer than the length of the short side of the first surface 111.

The fourth surface 114 may be a back surface (e.g., a back view) of the unit cell 100. The fourth surface 114 may include long sides extending in the first direction (X-axis), and short sides extending in the third direction (Z-axis). The fourth surface 114 may have a rectangular shape. The fourth surface 114 may be opposite to the third surface 113. In more detail, the fourth surface 114 may be opposite to the third surface 113 in the second direction (Y-axis). The fourth surface 114 may be in contact with the long side of the first surface 111 and the long side of the second surface 112. In other words, one of the long sides of the fourth surface 114 may be in contact with one of the long sides of the first surface 111, and the other of the long sides of the fourth surface 114 may be in contact with one of the long sides of the second surface 112. The length of the short side of the fourth surface 114 may be longer than the length of the short side of the first surface 111. While the third surface 113 is referred to as the front view of the unit cell 100 and the fourth surface 114 is referred to as the back view of the unit cell 100, the present disclosure is not limited thereto, and the third surface 113 may be the back view of the unit cell 100 and the fourth surface 114 may be the front view of the unit cell 100.

The first side surface 115 may be a first side (e.g., a first side view) of the unit cell 100. The first side surface 115 may include long sides extending in the third direction (Z-axis), and short sides extending in the second direction (Y-axis). The first side surface 115 may have a rectangular shape. The first side surface 115 may be in contact with the short sides of the first to fourth surfaces 111, 112, 113, and 114. The first side surface 115 may be defined as a structure formed of the short sides of the first to fourth surface 111, 112, 113, and 114. In more detail, the long sides of the first side surface 115 may be in contact with the short sides of the third surface 113 and the fourth surface 114, respectively. The short sides of the first side surface 115 may be in contact with the short sides of the first surface 111 and the second surface 112, respectively. The first electrode terminal 130 (e.g., see FIG. 1) may be provided on the first side surface 115. The first side surface 115 may include the cap plate (e.g., the first cap plate 120).

The second side surface 116 may be a second side (e.g., a second side view) of the unit cell 100 that is opposite to the first side surface 115. In more detail, the second side surface 116 may be opposite to the first side surface 115 in the first direction (X-axis). The second side surface 116 may be defined as a structure formed of the first to fourth surfaces 111, 112, 113, and 114. The second electrode terminal may be provided on the second side surface 116.

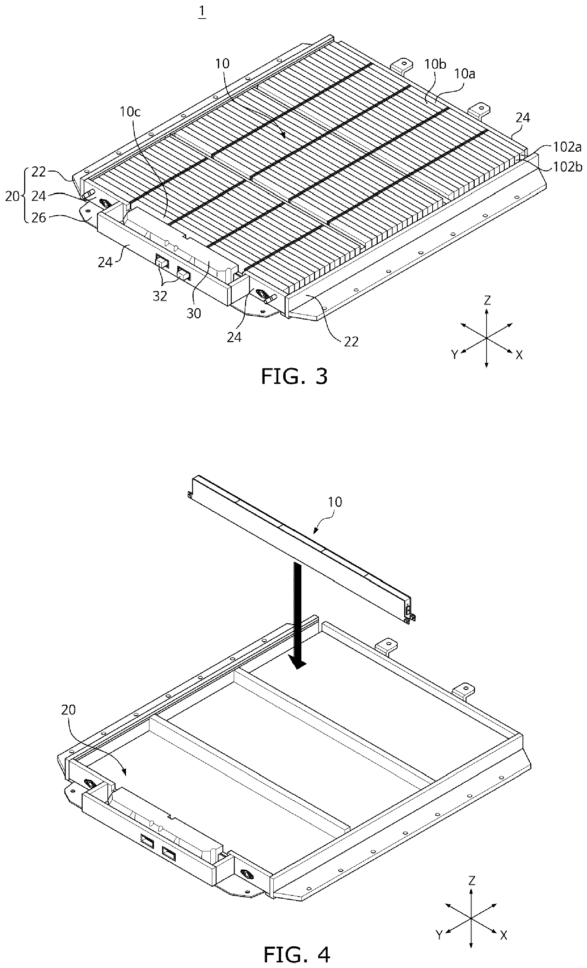

FIG. 3 is a perspective view illustrating a secondary battery pack 1 according to one or more embodiments of the present disclosure. FIG. 4 illustrates a method of placing a plurality of cell arrays 10 within a frame 20 according to one or more embodiments of the present disclosure.

Referring to FIG. 3, the secondary battery pack 1 includes a plurality of cell arrays 10, each including a plurality of unit cells 100, a frame 20 for containing the unit cells 100, and a battery management device 30. In some embodiments, the secondary battery pack 1 may be included in a vehicle.

Each of the cell arrays 10 includes a plurality of unit cells 100 arranged in series along the first direction (X-axis). For example, each of the cell arrays 10 may be provided by electrically connecting a first electrode terminal of one unit cell from among the unit cells 100 to a second electrode terminal of another adjacent unit cell from among the unit cells 100 in the first direction.

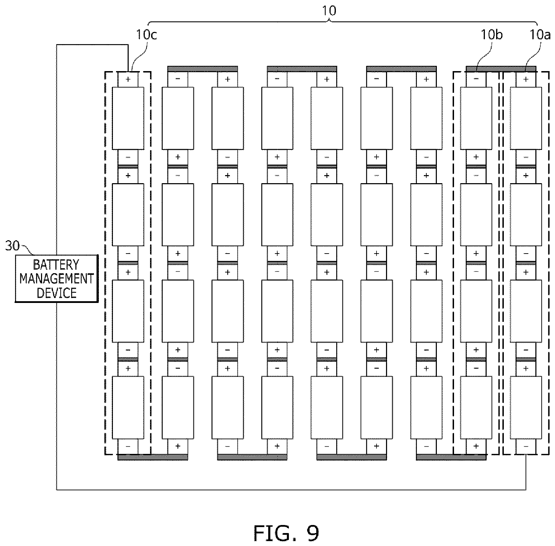

One cell array and the other adjacent cell array from among the cell arrays 10 may be arranged so that the outermost unit cells thereof in the same direction have different electrical polarities from each other. For example, one cell array and the other adjacent cell array may be arranged so that the electrode polarity of the outermost unit cell of a first cell array 10a in the first direction (X-axis) is different from the electrode polarity of the outermost unit cell of a second cell array 10b in the first direction (X-axis). This will be described in more detail below with reference to FIG. 9.

The cell arrays 10 may be inserted and contained within the frame 20. In some embodiments, the frame 20 may include a pair of end plates 24 facing outermost cell arrays 10a and 10c, a pair of side plates 22 connected (e.g., coupled or attached) perpendicularly to the end plates 24, and a bottom plate 26 connected to (e.g., coupled to or attached to) the end plates 24 and the side plates 22 to form a lower portion of the frame 20.

The cell array 10 and the battery management device 30 may be disposed on the frame 20. For example, referring to FIGS. 3 and 4, the cell arrays 10 may be inserted in the third direction (Z-axis) and disposed in the frame 20 so that the cell arrays 10 are perpendicular to or substantially perpendicular to the bottom plate 26. For example, the first cell array 10a and the second cell array 10b included in the cell arrays 10 may be disposed in the frame 20, so that a third surface (e.g., 113 in FIG. 2) of a 1_1st unit cell 102a of the first cell array 10a faces a fourth surface (e.g., 114 in FIG. 2) of a 2_1st unit cell 102b of the second cell array 10b.

The battery management device 30 may be a device for managing and controlling the charge/discharge of each of the unit cells 100. For example, the battery management device 30 may measure a voltage, a temperature, a current, and/or the like of the unit cells 100, and may adjust a voltage balance between the unit cells 100. In addition, the battery management device 30 may protect the unit cells 100 in the event of an abnormal condition, such as an overvoltage, an undervoltage, or a short circuit, in the unit cells 100. In some embodiments, the battery management device 30 may be in communication with a vehicle to transmit states of the unit cells 100 and/or receive information from the vehicle.

In some embodiments, the battery management device 30 may be disposed between the cell array 10c and the corresponding end plate 24. In this case, the end plates 24 may be configured into a shape corresponding to the outer shape of the battery management device 30 by fitting a plurality of subplates together.

The battery management device 30 may include a connector 32 connected to an external device such as a vehicle. In this case, each of the end plates 24 may include a through-hole through which the connector 32 extends.

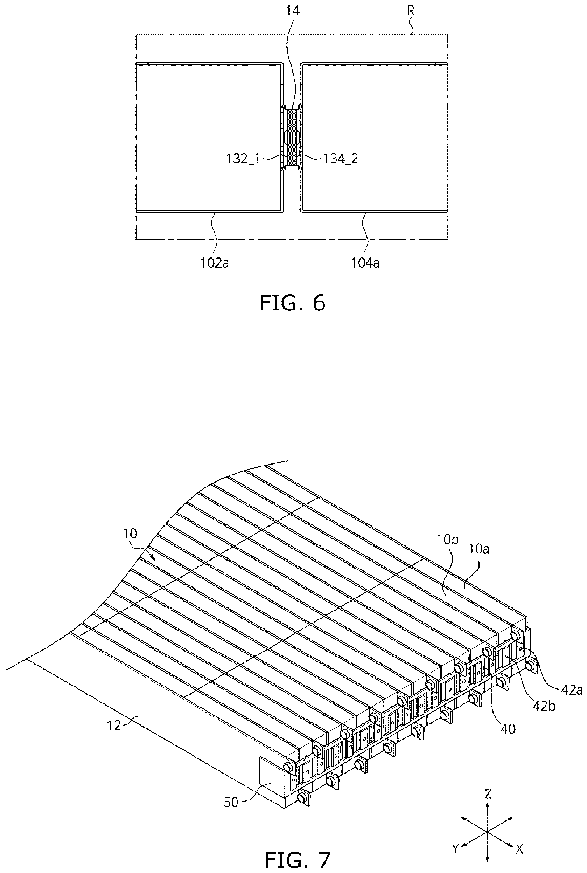

In addition, the secondary battery pack 1 may further include cooling plates 12 (e.g., see FIG. 7), each disposed between adjacent cell arrays, and/or a cooling plate disposed between the outermost cell array 10a and the corresponding (e.g., the adjacent) end plate 24. The cooling plate may be hollow and configured to contain a fluid, preferably cooling water. For example, a cooling plate may be disposed between the first cell array 10a and the second cell array 10b. For example, another cooling plate may be disposed between the first cell array 10a and the corresponding end plate 24.

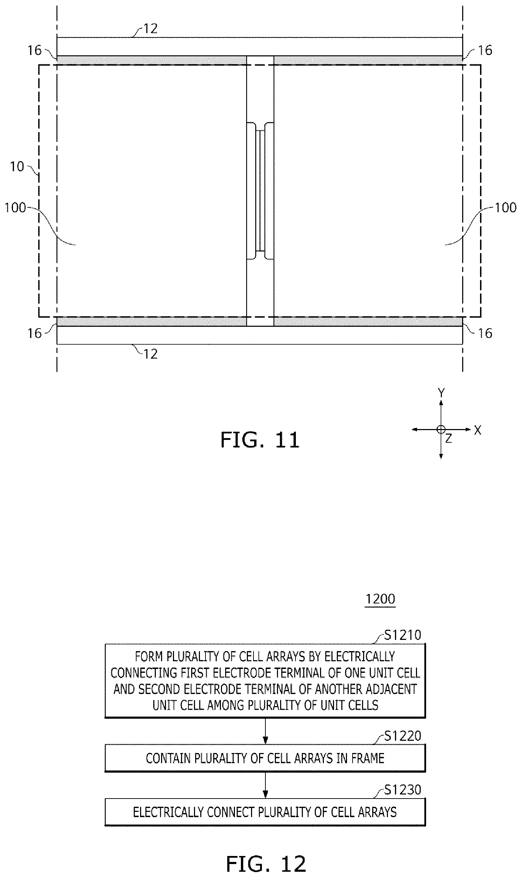

The secondary battery pack 1 may further include a heat transfer material 16 (e.g., see FIG. 11) between a corresponding cooling plate 12 and a cell array facing the corresponding cooling plate 12. The heat transfer material may be disposed in at least one position between the first cell array 10a and the cooling plate 12, or between the second cell array 10b and the cooling plate 12. For example, the heat transfer material may be disposed between the first cell array 10a and the cooling plate 12, or between the second cell array 10b and the cooling plate 12. The heat transfer material may be disposed between the first cell array 10a and the cooling plate 12, and between the second cell array 10b and the cooling plate 12.

As such, the structural strength of the secondary battery pack may be increased without a module frame for providing structural support between the unit cells.

In some embodiments, the secondary battery pack may be mounted on a vehicle. The vehicle may be, for example, an electric vehicle, a hybrid vehicle, or a plug-in hybrid vehicle. The vehicle may include a four-wheeled vehicle or a two-wheeled vehicle.

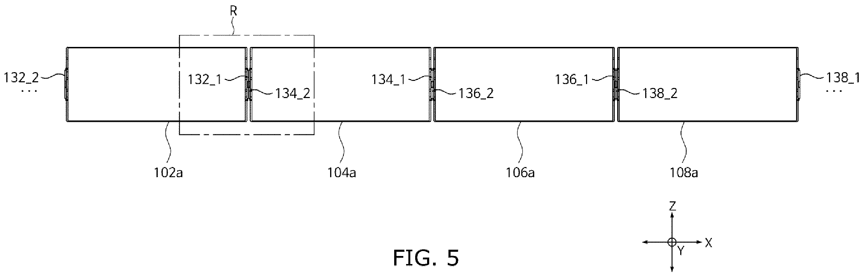

FIG. 5 illustrates an example of the cell array 10a including a plurality of unit cells 102a, 104a, 106a, and 108a connected to each other, according to one or more embodiments of the present disclosure. FIG. 6 illustrates an enlarged view of the region R in FIG. 5.

The cell array 10a may include the unit cells 102a, 104a, 106a, and 108a arranged in series along the first direction (X-axis). The cell array 10 may be provided by electrically connecting the first electrode terminal of one unit cell from among the unit cells to the second electrode terminal of an adjacent unit cell.

Referring to FIG. 5, in the first cell array 10a, the first electrode terminal 132_1 of the 1_1st unit cell 102a may be electrically connected to the second electrode terminal 134_2 of the 1_2nd unit cell 104a. In addition, the first electrode terminal 134_1 of the 1_2nd unit cell 104a may be electrically connected to the second electrode terminal 136_2 of the 1_3rd unit cell 106a. Further, the first electrode terminal 136_1 of the 1_3rd unit cell 106a may be connected to the second electrode terminal 138_2 of the fourth unit cell 108a. In addition, each of the second electrode terminal 132_2 of the first unit cell 102a and the first electrode terminal 138_1 of the fourth unit cell 108a may be electrically connected to an electrode terminal of another neighboring (e.g., adjacent) unit cell.

In some embodiments, in the unit cells, a first electrode terminal of one unit cell and a second electrode terminal of an adjacent unit cell may be electrically connected to each other by welding. Referring to FIG. 6, the first electrode terminal 132_1 of the 1_1st unit cell 102a of the first cell array 10a may be arranged to be electrically connected by welding to the second electrode terminal 134_2 of the 1_2nd unit cell 104a adjacent to the 1_1st unit cell 102a in the first direction (X-axis). For example, a junction 14 may be included between the first electrode terminal 132_1 of the 1_1st unit cell 102a and the second electrode terminal 134_2 of the 1_2nd unit cell 104a. In this case, the junction 14 may be formed by brazing, laser brazing, welding, or soldering. Thus, the junction 14 may be one of a brazing junction, laser brazing junction, welding junction, or soldering junction.

According to one or more embodiments described above, the cell array may be provided without additional connecting members, such as busbars, to reduce the weight of the secondary battery pack, thereby increasing the energy density.

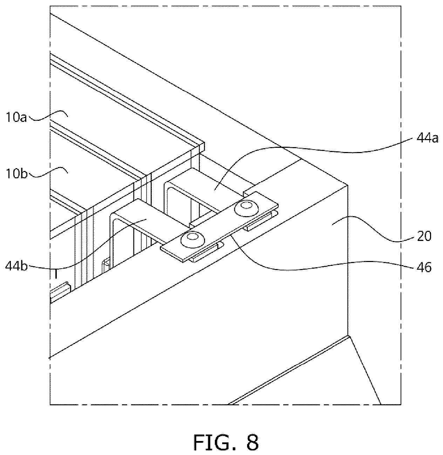

FIG. 7 illustrates an example of the cell array assembly including the cell arrays 10 according to one or more embodiments of the present disclosure. FIG. 8 illustrates an example of the cell array assembly including a busbar assembly according to one or more embodiments of the present disclosure.

FIG. 9 illustrates an example of an electrical connection configuration of the cell array assembly and the battery management device 30 according to one or more embodiments of the present disclosure.

The cell array assembly may refer to an assembly of the cell arrays 10. In some embodiments, the cell array assembly may refer to a configuration of the secondary battery pack 1 excluding the frame 20 and the battery management device 30.

Referring to FIG. 7, the cell arrays 10 of the cell array assembly may be arranged in a direction so that the wide surfaces (e.g., the third surface 113 or the fourth surface 114 in FIG. 2) face each other. For example, the first cell array 10a and the second cell array 10b may be disposed adjacent to each other. In this case, each of the first cell array 10a and the second cell array 10b may include a plurality of unit cells 100 arranged in series along the first direction (X-axis), and the second cell array 10b may be disposed adjacent to the first cell array 10a in a direction perpendicular to or substantially perpendicular to the first direction (X-axis). For example, the third surface of a unit cell of the first cell array 10a may be disposed to face the fourth surface of a unit cell of the second cell array 10b.

The unit cells included in each of the cell arrays 10a and 10b may be electrically connected to each other by the method described above with reference to FIGS. 5 and 6, and thus, redundant description may not be repeated.

In some embodiments, the cell array assembly may include a busbar assembly electrically connecting the cell arrays to one another. For example, referring to FIGS. 7 and 8, the busbar assembly may include a first busbar 42a connected to (e.g., coupled to or attached to) the first electrode terminal of the outermost unit cell of the first cell array 10a, a second busbar 44a connecting the first busbar 42a to the frame 20, a third busbar 42b connected to (e.g., coupled to or attached to) the second electrode terminal of the outermost unit cell of the second cell array 10b, a fourth busbar 44b connecting the third busbar 42b to the frame 20, and a fifth busbar 46 connecting the second busbar 44a and the fourth busbar 44b to each other. In another example, the busbar assembly may include a first busbar 42a connected to (e.g., coupled to or attached to) the first electrode terminal of the outermost unit cell of the first cell array, a third busbar 42b connected to (e.g., coupled to or attached to) the second electrode terminal of the outermost unit cell of the second cell array, and the first busbar 42a and the third busbar 42b may be directly connected to each other.

In addition, the busbar assembly may further include a busbar holder 50 holding a plurality of busbars 40 connected to (e.g., coupled to or attached to) the electrode terminals of the outermost unit cells of the cell arrays 10. For example, the busbars 40 may be received in a receiving hole formed in the busbar holder 50. Further, opposite ends of the busbar holder 50 may be connected to (e.g., coupled to or attached to) respective cooling plates attached to respective cell arrays disposed on opposite ends to hold the busbars 40.

Referring to FIG. 9, the cell array assembly may be electrically connected to the battery management device 30. For example, the battery management device 30 may be electrically connected to the first cell array 10a by the first busbar 42a connected to (e.g., coupled to or attached to) the first electrode terminal of the outermost unit cell of the first cell array 10a, and the second busbar 44a connecting the first busbar 42a to the frame 20. In this case, the first cell array 10a may be a cell array arranged facing the end plate. In some embodiments, the cell arrays 10 may include first to n^{th} cell arrays 10a to 10c arranged sequentially in a direction (e.g., the Y-axis) perpendicular to or substantially perpendicular to the first direction (X-axis), where n is a natural number greater than 1. In this case, the battery management device 30 may be electrically connected to the first electrode terminal of the outermost unit cell of the first cell array 10a and the second electrode terminal of the outermost unit cell of the n^{th} cell array 10c.

In FIG. 9, an odd number of cell arrays (e.g. 9 cell arrays) are illustrated, but the present disclosure is not limited thereto. For example, an even number of cell arrays (e.g., 10 cell arrays) may be disposed, in which case the battery management device may be connected to the unit cell disposed at the lower left and the unit cell disposed at the lower right (e.g., based on FIG. 9). In a case where an even number of cell arrays are provided, the connection between the battery management device and the unit cells may be simplified.

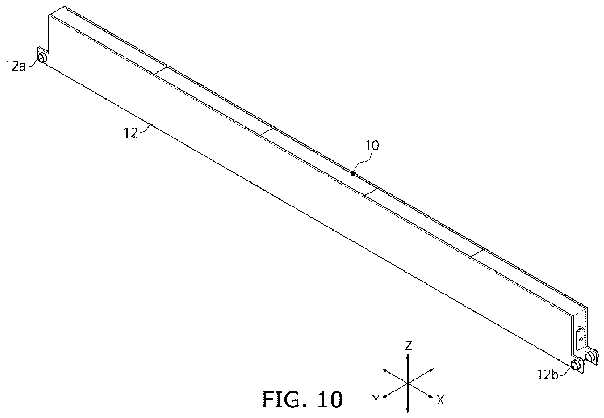

FIG. 10 illustrates an example of the cell array assembly to which the cooling plates 12 are attached, according to one or more embodiments of the present disclosure.

In some embodiments, the cell array assembly may include a plurality of cell arrays 10, and a cooling plate 12 attached on at least one surface of the cell arrays 10.

Referring to FIG. 10, the cooling plate 12 may be attached to the first cell array 10a to face a surface extending in the longitudinal direction of the first cell array 10a (e.g., the first direction (X-axis)). In some embodiments, the cooling plate 12 may cool the unit cells 100 using cooling water flowing through flow paths provided therein. For example, the cooling plate 12 may include at least one inlet 12a through which cooling water enters the cooling plate 12, and at least one outlet 12b through which cooling water exits the cooling plate 12.

FIG. 11 illustrates an example of the cell array assembly including a heat transfer material 16 according to one or more embodiments of the present disclosure.

In some embodiments, the cell array assembly may include a plurality of cell arrays 10, cooling plates 12 attached to at least one surface of each of the cell arrays 10, and at least one heat transfer material 16 disposed between the cell arrays 10 and the cooling plates 12. The cell array assembly may further include the heat transfer material 16 disposed in at least one position between the first cell array 10a (e.g., see FIG. 7) and the cooling plates 12, or between the second cell array 10b and the cooling plates 12. For example, the heat transfer material 16 may be disposed between the first cell array 10a and the cooling plates 12 or between the second cell array 10b and the cooling plates 12. The heat transfer material 16 may be disposed between the first cell array 10a and the cooling plate 12 and between the second cell array 10b and the cooling plate 12.

Referring to FIG. 11, the heat transfer material 16 may be disposed between the cell array 10 and the cooling plates 12. In this case, areas to which the at least one heat transfer material 16 is applied may be configured such that the sizes thereof correspond to the sizes of the third surface 113 (e.g., see FIG. 1) and the fourth surface 114 of the unit cell 100.

FIG. 12 is a flowchart illustrating a method 1200 of manufacturing a secondary battery pack according to one or more embodiments of the present disclosure.

In some embodiments, the method 1200 of manufacturing a secondary battery pack may be performed by an apparatus for manufacturing a secondary battery pack or the like (hereinafter, referred to as a manufacturing apparatus).

A manufacturing apparatus (e.g., an assembly part of a secondary battery process line) may form a plurality of cell arrays by electrically connecting a first electrode terminal of one unit cell and a second electrode terminal of another adjacent unit cell among a plurality of unit cells to each other (S1210). For example, the manufacturing apparatus may electrically connect the first electrode terminal of one unit cell from among the unit cells and the second electrode terminal of the other adjacent unit cell from among the unit cells to each other by welding.

In addition, in forming the cell arrays, the manufacturing apparatus may attach a cooling plate to a first side surface of at least one cell array from among the cell arrays, extending in the longitudinal direction of the cell array.

Further, in the forming of the cell arrays, the manufacturing apparatus may further place a heat transfer material between a first side surface of at least one unit cell of the unit cells, extending in longitudinal direction of the unit cell, and the cooling plate.

Thereafter, the manufacturing apparatus may contain (e.g., may insert or place) the cell arrays within a frame (S1220). For example, the manufacturing apparatus may place the cell arrays within the frame in a direction perpendicular to or substantially perpendicular to the bottom of the frame. For example, the cell arrays may be arranged so that a second surface 112 or a fourth surface 114 of each unit cell of the cell array faces the bottom of the frame.

In this case, one cell array and another adjacent cell array from among the cell arrays may be arranged so that the outermost unit cells have different electrode polarities. For example, the cell arrays may include a first cell array, and a second cell array adjacent to the first cell array. In this case, the manufacturing apparatus may arrange the cell arrays so that the electrode polarity of the outermost unit cell of the first cell array in a single direction is different from the electrode polarity of the outermost unit cell of the second cell array in the single direction.

Thereafter, the manufacturing apparatus may electrically connect the cell arrays to each other (S1230). For example, the manufacturing apparatus may connect a first busbar connected to (e.g., coupled to or attached to) the first electrode terminal of the outermost unit cell of the first cell array to the frame by a second busbar. The manufacturing apparatus may connect a third busbar connected to (e.g., coupled to or attached to) the second electrode terminal of the outermost unit cell of the second cell array to the frame by a fourth busbar. The manufacturing apparatus may connect the second busbar and the fourth busbar to each other by a fifth busbar.

In addition, the manufacturing device may electrically connect the first electrode terminal of the outermost unit cell of the first cell array and the second electrode terminal of the outermost unit cell of the n^{th} cell array 10c to the battery management device in a state where the first to n^{th} cell arrays are sequentially arranged within the frame.

However, the present disclosure is not limited to the method 1200 described above with reference to FIG. 12. For example, one or more processes of the method 1200 may be omitted, or the sequence or order of the processes of the method 1200 may be variously modified. For example, while the manufacturing apparatus has been described as containing (e.g., inserting or placing) a plurality of cell arrays within a frame before electrically connecting the cell arrays, the manufacturing apparatus may contain (e.g., may insert or place) the cell arrays within the frame after electrically connecting the cell arrays.

The electronic or electric devices and/or any other relevant devices or components according to embodiments of the present disclosure described herein (e.g., the battery management device) may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

### LIST OF REFERENCE SIGNS

| | | | |
|---|---|---|---|
| 1 | Secondary battery pack | 104a | 1_2nd unit cell |
| 10 | Cell array | 106a | 1_3rd unit cell |
| 10a | First cell array | 108a | Fourth unit cell |
| 10b | Second cell array | 110 | Case |
| 10c | Cell array | 111 | First surface |
| 12 | Cooling plate | 112 | Second surface |
| 12a | Inlet of cooling plate | 113 | Third surface |
| 12b | Outlet of cooling plate | 114 | Fourth surface |
| 14 | Junction | 115 | First side surface |
| 16 | Heat transfer material | 116 | Second side surface |
| 20 | Frame | 120 | First cap plate |
| 22 | Side plates | 122 | Electrolyte Inlet of cap plate |
| 24 | End plate | 130 | Electrode terminal |
| 26 | Bottom plate | 132_1 | First electrode terminal of first unit cell |
| 30 | Battery management device | | |
| 32 | Connector | 132_2 | Second electrode terminal of first unit cell |
| 40 | Busbars | | |
| 42a | First busbar | 134_1 | First electrode terminal of second unit cell |
| 42b | Third busbar | | |
| 44a | Second busbar | 134_2 | Second electrode terminal of second unit cell |
| 44b | Fourth busbar | | |
| 46 | Fifth busbar | 136_1 | First electrode terminal |
| 50 | Busbar holder | 136_2 | Second electrode terminal |
| 90 | Rotated | 138_1 | First electrode terminal |
| 100 | Unit cell | 138_2 | Second electrode terminal |
| 102a | First unit cell | 140 | Vent |
| 102b | 2_1st unit cell | 1200 | Method |

## Claims

1. A secondary battery pack (1) comprising:
a plurality of cell arrays (10, 10a, 10b, 10c), each comprising a plurality of unit cells (100, 102a, 104a, 106a, 108a) located in series along a first direction (X-axis); and
a frame (20) configured to include the cell arrays (10, 10a, 10b, 10c),
wherein each of the unit cells (100, 102a, 104a, 106a, 108a) comprises:
a first surface (111) having a long side extending in the first direction (X-axis);
a second surface (112) opposite to the first surface (111) and having a long side extending in the first direction (X-axis);
a third surface (113) perpendicular to the first surface (111) and in contact with the long side of the first surface (111) and the long side of the second surface (112);
a fourth surface (114) opposite to the third surface (113) and in contact with another long side of the first surface (111) and another long side of the second surface (112);
a first side surface (115) in contact with short sides of the first to fourth surfaces (111, 112, 113, 114);
a second side surface (116) opposite to the first side surface (115);
a first electrode terminal (130, 132_1, 134_1, 136_1, 138_1) on the first side surface (115); and
a second electrode terminal (132_2, 134_2, 136_2, 138_2) on the second side surface (116).

2. The secondary battery pack (1) as claimed in claim 1, wherein
the plurality of cell arrays (10, 10a, 10b, 10c) comprises a first cell array (10a) and a second cell array (10b),
the cell arrays (10a, 10b) are located within the frame (20), and
the third surface (113) of a 1_1st unit cell (102a) of the first cell array (10a) facing the fourth surface (114) of a 2_1st unit cell (102b) of the second cell array (10b).

3. The secondary battery pack (1) as claimed in one of claims 1 or 2, wherein
the plurality of cell arrays (10, 10a, 10b, 10c) comprises a first cell array (10a) and a second cell array (10b),
the plurality of unit cells of the first cell array (1 0a) comprising a 1_1st unit cell (102a) and a 1_2nd unit cell (104a), and
a first electrode terminal (132_1) of the 1_1st unit cell (102a) is electrically connected to a second electrode terminal (134_2) of the 1_2nd unit cell (104a) that are adjacent to each other in the first direction (X-axis).

4. The secondary battery pack (1) as claimed in claim 3, wherein the first electrode terminal (132_1) of the 1_1st unit cell (102a) and the second electrode terminal (134_2) of the 1_2nd unit cell (104a) are electrically connected to each other by a junction (14) located therebetween.

5. The secondary battery pack (1) as claimed in one of claims 2 to 4, further comprising a cooling plate (12) between the first cell array (10a) and the second cell array (10b).

6. The secondary battery pack (1) as claimed in claim 5, wherein the cooling plate (12) comprises:
at least one inlet (12a) configured to enter cooling water into the cooling plate (12); and
at least one outlet (12b) configured to exit cooling water from the cooling plate (12).

7. The secondary battery pack (1) as claimed in claim 5, further comprising a heat transfer material (16) located in at least one position between the first cell array (10a) and the cooling plate (12) or between the second cell array (10b) and the cooling plate (12).

8. The secondary battery pack (1) as claimed in at least one of the preceding claims, wherein the cell arrays (10, 10a, 10b, 10c) comprise a first cell array (10a), and a second cell array (10b) adjacent to the first cell array, and
wherein the cell arrays (10, 10a, 10b, 10c) are located so that an electrode polarity of an outermost unit cell (102a) of the first cell array (10a) in the first direction (X-axis) is different from an electrode polarity of an outermost unit cell (102b) of the second cell array (10b) in the first direction (X-axis).

9. The secondary battery pack (1) as claimed in claim 8, further comprising a busbar (40) assembly electrically connecting the first cell array (10a) and the second cell array (10b) to each other.

10. The secondary battery pack (1) as claimed in claim 9, wherein the busbar (40) assembly comprises:
a first busbar (42a) coupled to the first electrode terminal of the outermost unit cell (102a) of the first cell array (10a);
a second busbar (44a) connecting the first busbar (42a) and the frame (20) to each other;
a third busbar (42b) coupled to the second electrode terminal of the outermost unit cell (102b) of the second cell array (10b);
a fourth busbar (44b) connecting the third busbar (42b) and the frame (20) to each other; and
a fifth busbar (46) connecting the second busbar (44a) and the fourth busbar (44b) to each other.

11. The secondary battery pack (1) as claimed in claim 9, wherein the busbar (40) assembly comprises:
a first busbar (42a) coupled to the first electrode terminal of the outermost unit cell (102a) of the first cell array (10a); and
a third busbar (42b) coupled to the second electrode terminal of the outermost unit cell (102b) of the second cell array (10b),
wherein the first busbar (42a) and the third busbar (42b) are connected in series.

12. The secondary battery pack (1) as claimed in claim 8, further comprising a battery management device (30) electrically connected to the first cell array (10a) by:
a first busbar (42a) coupled to the first electrode terminal of the outermost unit cell (102a) of the first cell array (10a) (10a); and
a second busbar (44a) connecting the first busbar (42a) and the frame (20) to each other.

13. The secondary battery pack (1) as claimed in claim 12, wherein the cell arrays (10, 10a, 10b, 10c) comprise the first cell array (10a) to an n^{th} cell array (10c) sequentially located in a direction perpendicular to the first direction (X-axis), where n is a natural number greater than 1, and
wherein the battery management device (30) is electrically connected to the first electrode terminal of the outermost unit cell (102a) of the first cell array (10a) and the second electrode terminal of the outermost unit cell of the n^{th} cell array (10c).

14. A cell array assembly comprising:
a first cell array (10a) comprising a plurality of unit cells (100, 102a, 104a, 106a, 108a) located in series along a first direction (X-axis); and
a second cell array (10b) comprising a plurality of unit cells (100) located in series along the first direction (X-axis), the second cell array (10b) being adjacent to the first cell array (10a) in a direction perpendicular to the first direction (X-axis),
wherein each of the unit cells (100, 102a, 104a, 106a, 108a) comprises:
a first surface (111) having a long side extending in the first direction (ε-axis);
a second surface (112) opposite to the first surface (111), and having a long side extending in the first direction (X-axis);
a third surface (113) perpendicular to the first surface (111), and in contact with the long side of the first surface (111) and the long side of the second surface (112);
a fourth surface (114) opposite to the third surface (113), and in contact with another long side of the first surface (111) and another long side of the second surface (112);
a first side surface (115) in contact with short sides of the first to fourth surfaces (111, 112, 113, 114);
a second side (116) surface opposite to the first side surface (115);
a first electrode terminal (130, 132_1, 134_1, 136_1, 138_1) on the first side surface (115); and
a second electrode terminal (132_2,134_2,136_2,138_2) on the second side surface (116).

15. A method (1200) of manufacturing a secondary battery pack (1), comprising:
forming a cell array (10, 10a, 10b, 10c) by electrically connecting a first electrode terminal (130, 132_1, 134_1, 136_1, 138_1) of one unit cell (100, 102a, 104a, 106a, 108a) and a second electrode terminal (132_2, 134_2, 136_2, 138_2) of another adjacent unit cell (100, 102a, 104a, 106a, 108a) to each other from among a plurality of unit cells (100, 102a, 104a, 106a, 108a);
containing a plurality of cell arrays (10, 10a, 10b, 10c) comprising the cell array within a frame (20); and
electrically connecting the cell arrays (10, 10a, 10b, 10c) to each other,
wherein each of the unit cells (100, 102a, 104a, 106a, 108a) comprises:
a first electrode terminal (130, 132_1, 134_1, 136_1, 138_1) in a first side surface (115); and
a second electrode terminal (132_2, 134_2, 136_2, 138_2) in a second side surface (116) opposite to the first side surface (115).
